(19) Europäisches Patentamt
European Patent Office
Office européen des brevets

(11) EP 0 818 082 B1

(12) **EUROPÄISCHE PATENTSCHRIFT**

(45) Veröffentlichungstag und Bekanntmachung des Hinweises auf die Patenterteilung:
**18.11.1998 Patentblatt 1998/47**

(21) Anmeldenummer: 96907288.3

(22) Anmeldetag: **27.03.1996**

(51) Int Cl.6: **H04B 1/10**

(86) Internationale Anmeldenummer:
**PCT/DE96/00535**

(87) Internationale Veröffentlichungsnummer:
**WO 96/31010 (03.10.1996 Gazette 1996/44)**

(54) **VERFAHREN UND EMPFANGSEINRICHTUNG ZUR REKONSTRUKTION VON DURCH MEHRWEGEAUSBREITUNG GESTÖRTEN SIGNALEN**

PROCESS AND RECEIVER FOR THE RECONSTRUCTION OF SIGNALS DISTORTED BY MULTI-DIRECTIONAL DIFFUSION

PROCEDE ET RECEPTEUR POUR LA RECONSTRUCTION DE SIGNAUX DEFORMES PAR UNE DIFFUSION MULTIDIRECTIONNELLE

(84) Benannte Vertragsstaaten:
**DE ES FR GB IT SE**

(30) Priorität: **30.03.1995 DE 19511751**

(43) Veröffentlichungstag der Anmeldung:
**14.01.1998 Patentblatt 1998/03**

(73) Patentinhaber: **SIEMENS AKTIENGESELLSCHAFT**
**80333 München (DE)**

(72) Erfinder: **HAARDT, Martin**
**D-81477 München (DE)**

(56) Entgegenhaltungen:
**DE-A- 3 006 451**     **US-A- 4 736 460**
**US-A- 4 989 262**

**Beschreibung**

Die Erfindung bezieht sich auf ein Verfahren bzw. eine Empfangseinrichtung zur Rekonstruktion von durch Mehrwegeausbreitung gestörten Signalen.

In Funksystemen, insbesondere Mobilfunksystem oder Drahtlos-Kommunikationssystemen, führen steigende Teilnehmerzahlen zu Schwierigkeiten, wenn empfangene Signale den die Signale aussendenen Signalquellen zugeordnet und die Signale rekonstruiert werden sollen.

Signale unterliegen bei ihrer Ausbreitung in einem Ausbreitungsmedium Störungen durch Rauschen. Durch Beugungen und Reflexionen durchlaufen Signalkomponenten verschiedene Ausbreitungswege zwischen Signalquelle und Signalsenke, überlagern sich bei der Signalsenke und führen dort zu Auslöschungseffekten. Zum weiteren kommt es bei mehreren Signalquellen zu Überlagerungen der Signale verschiedener Signalquellen. Frequenzmultiplex-, Zeitlagenmultiplex oder ein als Code Division Multiplex bekanntes Verfahren nutzen eine Frequenz-, Zeitlagen- oder Kodezuteilung an jeden Teilnehmer - d.h. beim Senden des Teilnehmers an jede Signalquelle - und können somit die Teilnehmer einer Funknetzzelle unterscheiden. Durch diese Maßnahmen können auch die Signale mit Mehrwegeausbreitung rekonstruiert werden. Es treten jedoch Schwierigkeiten auf, den steigenden Teilnehmerzahlen unter Beibehaltung der physikalischen Übertragungsbedingungen gerecht zu werden.

Aus A.J.van der Veen, P.B.Ober und E.F.Deprettere, "Azimuth and elevation computation in high resolution DOA estimation", IEEE Trans. Signal Processing, Vol.40, S.1828-1832, Juli 1992; R.Roy und T.Kailath, "ESPRIT - Estimation of signal parameters via rotational invariance techniques", IEEE Trans. Acoust., Speech, Signal Processing, Vol. ASSP-37, S.984-995, Juli 1989 und A.L.Swindlehurst und T.Kailath, "Azimuth/elevation direction finding using regular array geometrics", IEEE Trans. Aerospace and Electronic Systems, Vol. 29, S. 145-156, Januar 1993 sind Verfahren bekannt, um die Einfallsrichtungen von verschiedenen Signalen bei der Signalsenke zu schätzen. Die Bestimmung der Einfallsrichtung ist unabhängig von den gewählten Modulationsverfahren oder der gewählten Signalform möglich, d.h. unabhängig von anderen Teilnehmerseparierungsverfahren.

Mit den aus R.Roy und T.Kailath, "ESPRIT - Estimation of signal parameters via rotational invariance techniques", IEEE Trans. Acoust., Speech, Signal Processing, Vol. ASSP-37, S.984-995, Juli 1989 bekannten "Standard" ESPRIT Verfahren können über die bestimmte Einfallsrichtung die Signale rekonstruiert werden, wenn die Signale über Einwegeausbreitung bei der Signalsenke eintreffen. Bei Mehrwegeausbreitung tritt jedoch eine wesentlich größere Anzahl einfallender Wellenfronten auf, da ein Signal in Signalkomponenten zerfällt und diese über mehrere Ausbreitungswege physikalisch als Wellenfronten bei der Signalsenke einfallen. Das Standard ESPRIT Verfahren kann die z.B. durch Reflexionen hervorgerufene Vielfalt an Signalkomponenten nicht in adäquater Form verarbeiten und ist deshalb für Anwendungen mit Mehrwegeausbreitung der Signale ungeeignet.

Aus DE 30 06 451 A1, US 4,736,460 und US 4,989,262 sind weitere Schaltungsanordnungen zur Interferenzauslöschung bekannt. WO 93/12590 zeigt ein Verfahren und eine Einrichtung zur räumlichen Trennung von gleichzeitig im selben Frequenzkanal übertragenen Signalen mehrerer Signalquellen. Dabei werden die Richtungsverhältnisse der Signalquellen in Bezug auf den Empfänger (Basisstation) zur Rekonstruktion der Signale der Signalquellen benutzt. Es wird jedoch nur eine Signalkomponente pro Signal ausgewertet.

Der Erfindung liegt die Aufgabe zugrunde, ein Verfahren bzw. eine Empfangseinrichtung zur Rekonstruktion von durch Mehrwegeausbreitung gestörten Signalen anzugeben, bei denen durch Zuordnung der aus verschiedenen Richtungen einfallenden Wellenfronten zu Signalquellen eine Signalwiedergewinnung möglich ist. Die Aufgabe wird durch das Verfahren nach Anspruch 1 und die Empfangseinrichtung nach Anspruch 16 gelöst.

Die Erfindung basiert auf einer Einteilung der Rekonstruktion von durch Mehrwegeausbreitung gestörten Signalen in zwei Schritte, so daß in einem ersten Schritt eine Schätzung der Einfallsrichtung der Wellenfronten, der jeweiligen d dominanten Signalkomponenten, und eine Rekonstruktion der Signalkomponenten durchgeführt wird. Die Anzahl p der zu verarbeitenden Signalkomponenten wird auf eine Anzahl d reduziert, dabei kann d durchaus größer als die Zahl l der wiederzugewinnenden Signale sein. Die p-d leistungsschwächeren Signalkomponenten und Störkomponenten werden dabei vernachlässigt. Die Wellenfronten sind im Ergebnis des ersten Schrittes separiert, so daß die zugehörigen Signalkomponenten weder von Signalkomponenten anderer Signalquellen noch von Signalkomponenten der gleichen Signalquelle gestört sind. Die leistungsschwächeren Signalkomponenten und Störungen sind schon durch den ersten Schritt herausgefiltert. Die Signalkomponenten liegen rein und nur durch einen kleinen Rauschanteil gestört vor.

Ein zweiter Schritt rekonstruiert die durch Mehrwegeausbreitung gestörten Signale unter Zuhilfenahme der nach Raumrichtungen getrennten Wellenfronten und damit der rekonstruierten Signalkomponenten durch Kombination der Signalkomponenten, indem die bestimmten d dominanten Signalkomponenten zu den l zugehörigen Signalquellen zugeordnet werden und in vorteilhafter Weise noch eine Bestimmung von Verzögerungszeiten und Wichtungsfaktoren im Sinne einer optimalen Kombination der Signalkomponenten zur Rekonstruktion der Signale - Anspruch 2 - vorgenommen wird. Das Verfahren kann sowohl auf eine eindimensionale, als auch auf eine zweidimensionale Auswertung der Einfallsrichtung der Wellenfronten bezogen werden.

Es ist weder eine exakte Trägerfrequenz- noch eine Zeitlagenauswertung für das erfindungsgemäße Verfahren nötig. Nach der Übertragung der Signale bzw. Signalkomponenten ins Basisband können diese sofort verarbeitet werden. Nur die nominale Trägerfrequenz muß zur Übertragung der Signale bzw. Signalkomponenten ins Basisband benutzt werden. Eine Frequenznachführung kann im Ergebnis der Signalkomponentenrekonstruktion für jede dominante Signalkomponente getrennt und damit optimiert durchgeführt werden. Es kann auch anhand einer Dopplerfrequenzmessung für jede Signalkomponente die jeweilige exakte Trägerfrequenz bestimmt werden. Die verschiedenen Ausbreitungswege der Signale führen zu unterschiedlichen Signallaufzeiten, die durch entsprechende Verzögerungen der eintreffenden Signalkomponenten mit kürzerer Laufzeit ausgeglichen werden können.

Die Trennung von miteinander korrelierten Wellenfronten ist möglich. Dies ist für Mobilfunkanwendungen von besonderer Bedeutung. Bisherige Signalrekonstuktionsverfahren konnten nicht auf die separierten Wellenfronten aufbauen, die unter Umständen durch Mehrwegeausbreitung aus den Quellensignalen entstanden und miteinander korreliert sind.

Die Zahl der stark miteinander korrelierten, separierbaren Wellenfronten kann durch eine der Bestimmung der Einfallsrichtungen der Wellenfronten vorangehende räumliche Glättung erhöht werden.

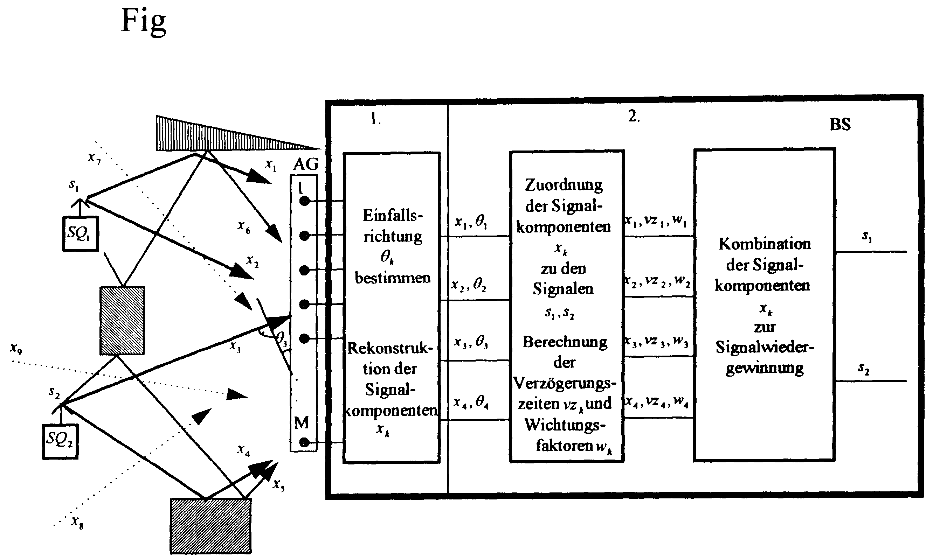

Ein in der Figur dargestelltes Ausführungsbeispiel des erfindungsgemäßen Verfahrens wird im weiteren anhand einer beispielhaften Mobilfunk-Einsatzumgebung näher erläutert, wobei nur ein eindimensionales Einfallsrichtungsauswerten nach $\theta_k$ erfolgt.

1 mobile Signalquellen $SQ_1, SQ_2$, im Ausführungsbeispiel ist 1=2, sind mit einer Basisstation BS über Funkverbindungen verbunden. Die von den zwei Signalquellen $SQ_1, SQ_2$ gesendeten Signale $s_1, s_2$ sind Störungen unterworfen und treffen über eine Mehrwegeausbreitung als Signalkomponenten $x_k$ bei einer der Basisstation BS zugeordneten Antennengruppe AG ein. So erreichen die dominanten Signalkomponenten $x_1, x_2$ des ersten Signales $s_1$ und die dominanten Signalkomponenten $x_3, x_4$ des zweiten Signales $s_2$ die einer Empfangseinrichtung zugeordneten Antennengruppe AG der Basisstation BS. Daneben erreichen die leistungsschwächeren Signalkomponenten $x_5, x_6$, sowie die Störkomponenten $x_7, x_8, x_9$ die Antennengruppe AG.

Neben einem HF-Element enthält jedes Antennenelement der Antennengruppe AG eine Einrichtung zur Umwandlung des mit dem Antennenelement empfangenen Hochfrequenz-Signals bzw. der - Signalkomponente in ein komplexes Basisbandsignal, das dann während einer Fensterlänge N mal abgetastet wird.

Zur Bestimmung der Einfallsrichtung $\theta_k$ der den jeweiligen vier dominanten Signalkomponenten $x_k$ (k=1..d=4) zugehörigen Wellenfronten unter Vernachlässigung der fünf leistungsschwächeren Signalkomponenten bzw. Störkomponenten $x_k$ (k=d+1=5..p=9) und der Rekonstruktion der dominanten Signalkomponenten $x_k$ wird beispielsweise auf das im folgenden dargestellte Verfahren zurückgegriffen.

Die Antennengruppe AG besteht aus M Elementen. Im Ausführungsbeispiel handelt es sich um eine uniforme lineare Antennengruppe AG mit einem Elementeabstand $\Delta$ kleiner oder gleich der halben Wellenlänge $\lambda$. Die Wellenfronten der Signalkomponenten $x_k$ treffen jeweils mit einem Winkel $\theta_{1,2,9}$ auf die eindimensionale Antennengruppe AG auf. Die Fensterlänge N wird dabei so gewählt, daß die Einfallswinkel $\theta_{1,2,9}$ während der Abtastungen einer Fensterlänge N als konstant angesehen werden können. Die Richtungsauswertung beruht auf dem Umstand, daß eine Signalkomponente $x_k$ zeitlich verzögert bei den verschiedenen Antennenelementen eintrifft. Zwischen den Abtastwerten einer Signalkomponente $x_k$ an den verschiedenen Antennenelementen besteht damit eine Phasenverschiebung, die eine Funktion der Einfallsrichtung $\theta_k$ ist. Mit der Ermittlung-der Phasenverschiebung ist die Bestimmung der Einfallsrichtung $\theta_k$ der Signalkomponente $x_k$ möglich. Die Richtungsbestimmung geht davon aus, daß alle Signalkomponenten $x_k$ die gleiche Trägerfrequenz haben.

Die Konfiguration der Antennengruppe AG ist jedoch im Sinne des erfindungsgemäßen Verfahrens einer Bedingung unterworfen. Die Antennengruppe AG muß zentro-symmetrisch sein, d.h. die geometrische Anordnung der Elemente muß paarweise symmetrisch in Bezug auf einen Mittelpunkt sein und die komplexen Eigenschaften symmetrischer Antennenelemente müssen identisch sein. Zusätzlich muß eine eindimensionale Antennengruppe AG in Richtung einer Ortskoordinate Invarianz aufweisen. Im weiteren wird folgende Notation verwendet: Spaltenvektoren bzw. Matrizen werden durch fettgedruckte Klein- bzw. Großbuchstaben gekennzeichnet; transponierte, konjugiert komplexe bzw. transjugierte Matrizen und Vektoren erhalten den Zusatz T, * bzw. H.

Die Systemmatrix **A** der Antennengruppe AG ist zentro-symmetrisch und erfüllt damit bestimmte Bedingungen, die sich mit der Gleichung (1) beschreiben lassen

$$\Pi_M A^* = A\Lambda \qquad A \in C^{M \times d}, \qquad\qquad (1)$$

wobei die komplexe Matrix $\Lambda$ eine unitäre Diagonalmatrix der Dimension d x d ist und d über eine Fensterlänge N zeitunabhängig die Anzahl der dominanten einfallenden Signalkomponenten $x_k$ angibt. $\Pi_M$ ist eine antidiagonale Permutationsmatrix der Dimension M. Es sei auch im voraus erwähnt, daß die Systemmatrizen der zwei zu bildenden Untergruppen der Antennengruppe AG die Bedingung nach Gleichung (1) ebenfalls erfüllen müssen.

Zur Bandbreite der durch die zentro-symmetrische Antennengruppe AG empfangenen Signale ist anzumerken, daß während der Ausbreitung der zu den Signalkomponenten $x_k$ zugehörigen Wellenfronten entlang der Antennenapertur keine merkliche Änderung der komplexen Hüllkurve der Signalkomponenten $x_k$ auftreten darf.

Die Anzahl der Abtastwerte N ist frei wählbar, wobei mit zunehmender Anzahl N der Abtastwerte die Schätzgenauigkeit steigt, jedoch auch die Dimension einer durch die Anzahl der Elemente M und die Anzahl der Abtastwerte N bestimmten Meßwertmatrix $\tilde{X}$ ,

dabei gibt $\tilde{x}_i\,(k)$ mit (i=1,2..M) und (k=1,2..N) den k-ten Abtastwert des i-ten Sensors an und die Meßwertmatrix $\tilde{X}$ hat die Form:

$$\tilde{X} \in C^{M \times N} = \begin{bmatrix} \tilde{x}_1(1) & \tilde{x}_1(2) & .. & \tilde{x}_1(N) \\ \tilde{x}_2(1) & \tilde{x}_2(2) & .. & \tilde{x}_2(N) \\ .. & .. & .. & .. \\ \tilde{x}_M(1) & \tilde{x}_M(2) & .. & \tilde{x}_M(N) \end{bmatrix} . \qquad (2)$$

Die Verarbeitung von Matrizen hoher Dimension ist aufwendiger als die von Matrizen kleinerer Dimension. Gleiches gilt auch für komplexe, durch Real- und Imaginärteil bestimmte Matrizen gegenüber reellen Matrizen. Ein geringer Verarbeitungsaufwand von Signalauswerteverfahren ist Voraussetzung für die Nutzung dieser Verfahren in Echtzeitsystemen.

Das Verfahren baut auf vorliegenden, von der Antennengruppe AG empfangenen und anschließend aufbereiteten Meßwerten $\tilde{x}_i\,(k)$ auf, und wird in einem Mittel zur Signalverarbeitung, z.B. eine digitalen Signalprozessor der Empfangseinrichtung verwirklicht.

Als erster Verfahrensschritt werden die Abtastwerte für jedes Antennenelement in der gleichen Reihenfolge in die Meßwertmatrix $\tilde{X}$ eingelesen. Sollte nur ein Abtastwert zur Verfügung stehen, muß sich eine räumliche Glättung der Meßwerte anschließen. Aus B.Widrow et al, "Signal Cancellation Phenomena in Adaptive Antennas: Causes and Cures", in IEEE Trans. on Antennas and Propagation, Vol. AP-30, S. 469-478, Mai 1982 sind Verfahren zur räumlichen Glättung bekannt. Bei einem Einsatz der räumlichen Glättung im Richtungsbestimmungsverfahren des Ausführungsbeispiels wird die Antennengruppe AG in mehrere Untergruppen unterteilt und die abgetasteten Meßwerte $\tilde{x}_i\,(k)$ vorgemittelt, so daß auch eine der doppelten Anzahl der gebildeten Untergruppen entsprechende Anzahl von kohärenten Signalkomponenten $x_k$ gleichzeitig detektiert werden kann, wenn sie aus verschiedenen Richtungen einfallen.

Die komplexe Meßwertmatrix $\tilde{X}$ wird nach der Initialisierung in eine zweite, rein reelle Matrix T($\tilde{X}$ ) nach Gleichung (3) überführt:

$$\mathrm{T}(\tilde{X}) = Q_M^H \left[ \tilde{X} \quad \Pi_M \tilde{X}^* \Pi_N \right] Q_{2N} . \qquad (3)$$

Die Matrizen $Q_M^H$ und $Q_{2N}$ sind unitäre, links $\Pi$-reelle Matrizen und sind beispielsweise gemäß (4) und (5):

$$Q_{2n} = \frac{1}{\sqrt{2}} \begin{bmatrix} I_n & jI_n \\ \Pi_n & -j\Pi_n \end{bmatrix} \text{ für Matrizen gerader Ordnung} \qquad (4)$$

bzw.

$$Q_{2n+1} = \frac{1}{\sqrt{2}} \begin{bmatrix} I_n & 0 & jI_n \\ 0^T & \sqrt{2} & 0^T \\ \Pi_n & 0 & -j\Pi_n \end{bmatrix} \text{ für ungeradzahlige Matrizen} \qquad (5)$$

zu wählen ($I_n$ ist eine n-dimensionale Einheitsmatrix).

Eine links $\Pi$-reelle Matrix genügt generell der Bedingung $\Pi_p Q^* = Q$ mit $Q \in C^{p \times q}$. $\Pi_M$ und $\Pi_N$ sind antidiagonale

Permutationsmatrizen einer Dimension die der Anzahl der Sensorgruppenelemente M bzw. der Anzahl der Abtastwerte N entspricht. $\Pi_n$ ist eine n-dimensionale antidiagonale Permutationsmatrix.

Die zweite, rein reelle Matrix $T(\tilde{X})$ hat die Dimension (M x 2N), sie schafft somit eine Verdopplung der zur Verfügung stehenden Matrixelemente allein durch wenig aufwendige Rechenoperationen. Die Verdopplung der Dimension im Vergleich zur Meßwertmatrix $\tilde{X}$ schafft eine dem Verfahren inhärente Vorwärts-Rückwärtsmittelung der Meßwerte.

Als folgender Verfahrensschritt wird eine Signalunterraumschätzung durchgeführt. Dazu einsetzbare Verfahren sind in A.J.Van der Veen, E.F.Deprettere und A.L.Swindlehurst, "Subspace-based signal analysis using singular value decomposition", Proc. IEEE, Vol. 81, S. 1277-1308, September 1993 näher erläutert. Aus der zweiten, rein reellen Matrix $T(\tilde{X})$ wird eine Signalunterraummatrix $E_s$ mit der Dimension (Mxd) gewonnen, deren d Spalten den d-dimensionalen Signalunterraum aufspannen. Entspricht die Anzahl der Abtastwerte N nicht der Anzahl d der dominanten Signalkomponenten $x_k$ dann findet dadurch eine Rangreduzierung statt. Die Anzahl d der dominanten Signalkomponenten $x_k$ kann a priori bekannt sein und damit dem Verfahren zur Verfügung stehen oder sie wird in diesem Verfahrensschritt bestimmt. Die Bestimmung der d dominanten die Signalkomponenten $x_k$ repräsentierenden Singulär- oder Eigenwerte kann durch Auswahl der sich über einem durch eine starke Leistungsdifferenz repräsentierenden Schwellwert befindlichen Singulär- oder Eigenwerte geschehen. In manchen Signalunterraumschätzmethoden ist diese Bestimmung auch implizit enthalten. Die Bestimmung der aus der zweiten, rein reellen Matrix $T(\tilde{X})$ hervorgegangenen Signalunterraummatrix $E_s$ wird ein dem Fachmann als Singulärwertzerlegung der zweiten, rein reellen Matrix $T(\tilde{X})$ bekanntes Verfahren gewählt. Die Eigenwertzerlegung der geschätzten Kovarianzmatrix $T(\tilde{X})T^H(\tilde{X})$ oder eine Schurartige Signalunterraumschätzmethode können ebenso gewählt werden.

Die uniforme lineare Antennengruppe AG wird im folgenden im Ausführungsbeispiel des eindimensionalen Verfahrens als in zwei identische, aber um einen Elementeabstand $\Delta$ verschobene Untergruppen eingeteilt. Zu beachten ist dabei, daß die Untergruppen zueinander in Bezug auf den Antennengruppenmittelpunkt symmetrisch sind - dies kann nur bei schon symmetrischen Antennengruppen der Fall sein. Eine möglichst große Überlappung der Untergruppen ist in der Regel gewünscht, da dadurch jede Untergruppe eine Maximalzahl m von Antennnenelementen aufweisen kann und eine größtmögliche Auflösung erzielt werden kann.

Der Abstand $\Delta$ der zwei Untergruppen ist im Falle der maximalen Überlappung und bei konstantem Elementeabstand gleich diesem Elementeabstand $\Delta$. Beim Ausfall einzelner Antennenelemente lassen sich uniforme Antennengruppen leichter unter Beibehaltung der Symmetrie anpassen.

Zur Aufstellung eines ggf. überbestimmten Gleichungssystems der Signalunterraummatrix $E_s$ müssen Selektionsmatrizen $K_1, K_2$ aufgestellt werden. Diese Selektionsmatrizen $K_1, K_2$ werden aus einer Ähnlichkeitsabbildung nach Gleichung (6) aus zentro-hermitischen Matrizen gewonnen.

$$K_1 = Q_m^H(J_1 + J_2)Q_M$$

$$K_2 = Q_m^H j(J_1 - J_2)Q_M \tag{6}$$

Für die gewählte Antennengruppe AG (Elementezahl M, Untergruppenelementezahl m) ergeben sich beispielsweise Hilfsmatrizen $J_1, J_2 \in R^{m \times M}$:

$$J_1 = \begin{bmatrix} 1 & 0 & .. & 0 & 0 & 0 \\ 0 & 1 & .. & 0 & 0 & 0 \\ .. & .. & .. & .. & .. & .. \\ 0 & 0 & .. & 1 & 0 & 0 \\ 0 & 0 & .. & 0 & 1 & 0 \end{bmatrix} \quad \text{und} \quad J_2 = \begin{bmatrix} 0 & 1 & 0 & .. & 0 & 0 \\ 0 & 0 & 1 & .. & 0 & 0 \\ .. & .. & .. & .. & .. & .. \\ 0 & 0 & 0 & .. & 1 & 0 \\ 0 & 0 & 0 & .. & 0 & 1 \end{bmatrix} . \tag{7}$$

Die Hilfsmatrix $J_1$ selektiert die Elemente der ersten Untergruppe und die Hilfsmatrix $J_2$ die Elemente der zweiten Untergruppe. Damit ergeben sich die Selektionsmatrizen $K_1, K_2$ bei einer Wahl der links $\Pi$-reelle Matrizen $Q_m^H, Q_M$ für M=6 und m=5 nach den Gleichung (4) und (5).

Es kann nun ein Gleichungssystem nach Gleichung (8) aufgestellt werden:

$$K_1 E_S Y \approx K_2 E_S \qquad (8)$$

Die wiederum rein reelle Lösungsmatrix $Y$, $Y \in \boldsymbol{R^{d \times d}}$, kann approximativ mit Hilfe bekannter Lösungsmethoden für Gleichungssysteme, wie dem Kleinste-Fehlerquadrat-Verfahren gefunden werden.

Die Bestimmung der Eigenwertmatrix $\Omega \in \boldsymbol{R^{d \times d}}$ aus der Lösungsmatrix $\boldsymbol{Y}$ wird über eine Eigenwert-Zerlegung gemäß Gleichung (9) durchgeführt:

$$Y = T\Omega T^{-1} \in R^{d \times d} . \qquad (9)$$

Die Eigenwertmatrix $\Omega$ enthält auf ihrer Diagonalen die Eigenwerte $\omega_k$ ($\Omega = \boldsymbol{diag}\,(\omega_k)$). Die Matrizen $T$ und $T^{-1}$ repräsentieren eine Spaltenmatix der Eigenvektoren bzw. dieselbe in einer invertierten Form. Die Eigenwerte $\omega_k$ können auch über eine Schur-Zerlegung bestimmt werden.

Mit einem das eindimensionale erfindungsgemäße Verfahren besonders auszeichnenden Zuverlässigkeitstest werden alle ermittelten Eigenwerte $\omega_k$ auf ihre Eigenschaften getestet. Werden nur reelle Eigenerte $\omega_k$ festgestellt, so können die ermittelten Eigenwerte $\omega_k$ als zuverlässig angesehen werden. Beim Auftreten von konjugiert komplexen Lösungen ist diese Zuverlässigkeit nicht gegeben und eine Wiederholung des Verfahrens mit einer größeren Anzahl von Sensorelementen $M$ oder einer größeren Anzahl von Abtastwerten $N$ ist vonnöten.

Die Einfallsrichtungen $\theta_k$ der Signale bzw. Signalkomponenten zur Richtungsschätzung der einfallenden Wellenfronten werden über die Gleichung (10)

$$\mu_k = 2\arctan\omega_k = 2\pi/\lambda \cdot \Delta \sin \theta_k \qquad (10)$$

bestimmt. Die Wellenlänge $\lambda$ ist für die Signale $s_1, s_2$ gleich.

Die Signalkomponenten $x_k$ ($k=1..d=4$) werden mittels einer Multiplikation einer Pseudoinversen der geschätzten, die Phasenfaktoren $e^{j\mu_k}$ der ermittelten Eigenwerte $\omega_k$ enthaltenden geschätzten Systemmatrix $\hat{A}$, $\hat{A} \in \boldsymbol{R^{M \times d}}$, mit der Meßwertmatrix $\tilde{X}$ gemäß der allgemeinen Gleichung (11) wiedergewonnen.

$$\hat{\boldsymbol{x}} = \hat{\boldsymbol{A}}^+ \tilde{\boldsymbol{X}} , \qquad (11)$$

wobei eine geeignete Pseudoinverse $\hat{A}^+$ der in Gleichung (12) für das Ausführungsbeispiel ($d=4$) angegebenen Systemmatrix $\hat{A}$ zum Beispiel über die Gleichung (13) gebildet wird.

Die geschätzte Systemmatrix $\hat{A}$ des Ausführungsbeispiels hat die Form:

$$\hat{\boldsymbol{A}} = \begin{bmatrix} 1 & 1 & 1 & 1 \\ e^{j\mu_1} & e^{j\mu_2} & e^{j\mu_3} & e^{j\mu_4} \\ e^{j2\mu_1} & e^{j2\mu_2} & e^{j2\mu_3} & e^{j2\mu_4} \\ \cdot\cdot & \cdot\cdot & \cdot\cdot & \cdot\cdot \\ e^{j(M-1)\mu_1} & e^{j(M-1)\mu_2} & e^{j(M-1)\mu_3} & e^{j(M-1)\mu_4} \end{bmatrix} . \qquad (12)$$

Die Gleichung zur Bildung der Pseudoinversen $\hat{A}^+$ der geschätzten Systemmatrix $\hat{A}$ kann wie folgt angegeben werden:

$$\hat{A}^+ = (A^H A)^{-1} A^H . \qquad (13)$$

Im Ergebnis dieses Verfahrensschrittes sind die Einfallsrichtungen $\theta_k$ der $d$ dominanten Wellenfronten, d.h. Signalkomponenten $x_k$, trotz unter Umständen starker Korrelation bestimmt und die Wellenfronten rekonstruiert. Auch zwei kohärente Wellenfronten lassen sich auflösen. Ist es nötig, eine größere Anzahl kohärenter Wellenfronten zu unterscheiden, so wird zweckmäßig ein als "räumliche Glättung" bekanntes Verfahren der Einfallsrichtungsbestimmung vorangestellt.

Die Zuordnung der bestimmten d dominanten Signalkomponenten $x_k$ (k=1..d=4) zu den zugehörigen Signalquellen $SQ_1,SQ_2$ wird beispielsweise durch ein aus J.G.Proakis, "Digital Communications", McGraw Hill, N.Y., 1989, 2.Auflage bekanntes Verfahren durchgeführt, bei dem jedem Teilnehmer eine Kode zugewiesen wird, der in den gesendeten Signalen und damit auch in jeweils allen Signalkomponenten enthalten ist.

Gemäß z.B. dem aus J.G.Proakis, "Digital Communications", McGraw Hill, N.Y., 1989, 2.Auflage bekannten Maximum-Ratio-Verfahren wird nun unter Zuhilfenahme der d rekonstruierten Wellenfronten für jede Signalkomponente $x_k$ eine Verzögerungszeit $vz_k$ und ein Wichtungsfaktor $w_k$ im Rahmen einer Zuordnung einer Gruppe von Signalkomponenten $x_{1,2},x_{3,4}$ zum jeweiligen Quellensignal $s_1,s_2$ berechnet.

Die Kenntnis der rekonstruierten Wellenfronten ermöglicht es erstmalig, optimale Berechnungskriterien zu dieser Berechnung einzusetzen.

Die Signale $s_1,s_2$ werden schließlich durch Kombination der zur jeweiligen Signalquelle $SQ_1,SQ_2$ zugehörigen Signalkomponenten $x_k$ wiedergewonnen.

Verfahren zum richtungsempfindlichen Auswerten empfangener Signale, d.h. eine räumlichen Filterung, lassen sich auf den Empfang elektro-magnetischer, akustischer und anderweitiger Wellenformen anwenden.

Zur zweidimensionalen Auswertung wird die Einfallsrichtung $\theta_k,\phi_k$ der Wellenfronten nach zwei Raumkoordinaten aufgelöst.

Die aus dem Empfangsfall durch die Auswerteeinrichtung gewonnene, geschätze Systemmatrix $\hat{A}$ kann auch für das Senden genutzt werden. Sind die uniforme lineare Antennengruppe AG und die Antennen der Signalquellen $SQ_1$, $SQ_2$ jeweils Sende- und Empfangsantennen, so sind die Signalwege für den Sende- und Empfangsfall identisch. Die durch die Antennengruppe AG zu sendenden Signale können nun in einer Weise in Signalkomponenten zerlegt und in verschiedene, durch das Empfangen bestimmte Richtungen abgestrahlt werden, daß sie sich beim Empfänger leistungsmäßig überlagern.

**Patentansprüche**

1. Verfahren zur Rekonstruktion von durch Mehrwegeausbreitung gestörten Signalen $(s_1,s_2)$,
   wobei p Signalkomponenten $(x_k)$ zuordenbare Wellenfronten mittels einer zentro-symmetrischen Sensorgruppe empfangen werden,
   mit zwei getrennt durchzuführende Maßnahmen:

   1)eine Bestimmung der Einfallsrichtung $(\theta_k,\phi_k)$ der jeweils d dominanten Signalkomponenten $(x_k$, k=1..d) zugehörigen Wellenfronten unter Vernachlässigung von p-d leistungsschwächeren Signalkomponenten $(x_k$ k=d..p) und Störkomponenten durch Ausnutzung zwischen den Sensorelementen auftretender Phasendifferenzen bezüglich einer Wellenfront und
   eine Rekonstruktion der d dominanten Signalkomponenten $(x_k$, k=1..d) und
   2)unter Zuhilfenahme der gemäß Maßnahme 1) rekonstruierten d dominanten Signalkomponenten $(x_k$, k=1..d)

   - eine Zuordnung der bestimmten d dominanten Signalkomponenten $(x_k$, k=1..d) zu den zugehörigen, räumlich getrennten Signalquellen $(SQ_1,SQ_2)$ und
   - eine Rekonstruktion der Signale $(s_1,s_2)$ durch eine Kombination der zu einer Signalquelle $(SQ_1,SQ_2)$ zugehörigen Signalkomponenten $(x_k)$.

2. Verfahren nach Anspruch 1,
   **dadurch gekennzeichnet**,

   daß ausgehend von der Zuordnung der d dominanten Signalkomponenten $(x_k$ k=1..d) zu den Signalquellen $(SQ_1,SQ_2)$ für die jeweils einer Signalquelle $(SQ_1,SQ_2)$ zugehörigen Signalkomponenten $(x_k)$ eine die phasenrichtige Überlagerung gestattende Zuordnung von Verzögerungszeiten $(vz_k)$ und Wichtungsfaktoren $(w_k)$ vorgenommen wird.

3. Verfahren nach einem der Ansprüche 1 oder 2,
   **dadurch gekennzeichnet**,
   daß als erste Maßnahme

- eine komplexe Meßwertmatrix ($\tilde{X}$) mit einer durch die Anzahl der Sensorelemente und die Anzahl der Abtastwerte bestimmten Dimension (M x N) durch Abspeichern der Abtastwerte initialisiert wird,
- eine Bestimmung einer ausschließlich reelle Werte enthaltenden, den Meßwerten zuordenbaren zweiten, rein reellen Matrix (T($\tilde{X}$)) mit der doppelten Elementezahl durch eine Ähnlichkeitsabbildung einer aus der komplexen Meßwertmatrix ($\tilde{X}$) und einer Verknüpfung der M-dimensionalen antidiagonalen Permutationsmatrix ($\Pi_M$), der konjugiert komplexen Meßwertmatrix ($\tilde{X}$ *) und einer N-dimensionalen antidiagonalen Permutationsmatrix ($\Pi_N$) gebildeten zentro-hermitischen Matrix über eine M-dimensionale links $\Pi$-reelle, transjugierte Matrix ($Q_M^H$) und die 2N-dimensionale links $\Pi$-reelle Matrix ($Q_{2N}$) nach der Beziehung

$$T(\tilde{X}) = Q_M^H \begin{bmatrix} \tilde{X} & \Pi_M \tilde{X}^* \Pi_N \end{bmatrix} Q_{2N}$$

vorgenommen wird,

- eine Signalunterraumschätzung zur Ermittlung der reellen Signalunterraummatrix ($E_S$) durch Verarbeitung der zweiten, rein reellen Matrix (T($\tilde{X}$)), deren Signalunterraum durch die d dominanten Spaltenvektoren der Signalunterraummatrix ($E_s$) aufgespannt wird,
- eine für jede Auswertedimension des Verfahrens getrennt vorgenommene Untergruppenbildung der zentro-symmetrischen Sensorgruppe in zwei zueinander verschobenen Untergruppen und eine Festlegung von je zwei Selektionsmatrizen ($K_1, K_2$) für jede Auswertedimension entsprechend der Konfiguration der Untergruppen vorgenommen wird,
- eine für jede Auswertedimension des Verfahrens getrennt vorgenommene Lösung des durch die aus der Signaluntergruppenbildung hervorgegangenen, die d dominanten Spaltenvektoren enthaltenden Signalunterraummatrix ($E_S$) und die Selektionsmatrizen ($K_1, K_2$) vorgegebenen Gleichungssystems durchgeführt wird, so daß jeweils eine Lösungsmatrix (Y) gemäß $K_1 E_S Y \approx K_2 E_S$ zur Verfügung steht,
- eine Bestimmung der je nach der Dimension des Auswerteverfahrens reellen bzw. komplexen Eigenwertmatrix ($\Omega$) aus der Lösungsmatrix (Y) vorgenommen wird und
- eine Rekonstruktion der Signalkomponenten ($x_k$, k=1..d) durch eine Multiplikation einer Pseudoinversen einer geschätzten, die Phasenfaktoren ($e^{j\mu_k}$) der ermittelten Eigenwerte ($\omega_k$) enthaltenden Systemmatrix ($\hat{A}$) mit der komplexen Meßwertmatrix ($\tilde{X}$) vorgenommen wird.

4. Verfahren nach einem der Ansprüche 1 bis 3,
   **dadurch gekennzeichnet**,

   daß die Sensorgruppe eindimensional ausgebildet ist und aus M Elementen besteht und
   daß das Verfahren nur eine Richtungsauswertedimension aufweist.

5. Verfahren nach Anspruch 3 und 4,
   **dadurch gekennzeichnet**,

   daß eine Zuverlässigkeitsabschätzung des Verfahrens durch einen Test der ermittelten Eigenwerte ($\omega_k$) vorgesehen ist.

6. Verfahren nach einem der Ansprüche 1 bis 3,
   **dadurch gekennzeichnet**,

   daß die Sensorgruppe zweidimensional ausgebildet ist und aus M Elementen besteht und
   daß das Verfahren zwei Richtungsauswertedimensionen aufweist.

7. Verfahren nach Anspruch 6,
   **dadurch gekennzeichnet**,
   daß die zweidimensionale, flächenhafte, zentro-symmetrische, in zwei Richtungen invariable Sensorgruppe aus M Elementen besteht und das Verfahren die Auswertedimensionen x und y aufweist, daß

- die Selektionsmatrizen ($K_{\mu 1}, K_{\mu 2}, K_{\nu 1}, K_{\nu 2}$) entsprechend den zwei Dimensionen der Sensorgruppe bestimmt werden,
- die Lösung des durch die aus der Signaluntergruppenbildung hervorgegangenen, die d dominanten Signalvektoren enthaltenden Signalunterraummatrix ($E_S$) und die Selektionsmatrizen ($K_1, K_2$) vorgegebenen Gleichungssystems nach den Dimensionen x und y gemäß den Beziehungen $\boldsymbol{K}_{\mu,\nu1}E_s Y_{\mu,\nu} \approx \boldsymbol{K}_{\mu,\nu2}\boldsymbol{E_s}$ durchgeführt wird, so daß jeweils eine Lösungsmatrix (**Y**) gemäß $\boldsymbol{K_1 E_S Y} \approx \boldsymbol{K_2 E_S}$ vorgenomen wird und die Lösungsmatrizen ($Y_\mu, Y_\nu$) zur Verfügung stehen,

- die Paarung der Eigenwerte der Lösungsmatrizen ($Y_\mu, Y_\nu$) über eine komplexe Bestimmung der komlexen Eigenwertmatrix ($\Omega$) nach der Beziehung $\boldsymbol{Y}_\mu + \boldsymbol{jY}_\nu = T\Omega T^{-1}$ erfolgt und
- die durch den Azimut ($\theta_k$) und Elevationswinkel ($\phi_k$) repräsentierten Einfallsrichtungen durch die Beziehungen $\omega_{\mu k} = \tan(\mu_k/2)$, $\omega_{\nu_k} = \tan(\nu_k/2)$; $\boldsymbol{u_k} = \cos\phi_k \sin\theta_k$, $\boldsymbol{\nu_k} = \sin\phi_k \sin\theta_k$ und $\mu_k = 2\pi/\lambda \cdot \Delta_x u_k$, $\nu_k = 2\pi/\lambda \cdot \Delta_y \nu_k$ bestimmt werden.

8. Verfahren nach einem der Ansprüche 1 bis 7,
   **dadurch gekennzeichnet**,

   daß vor der Bestimmung der Einfallsrichtungen ($\theta_k, \phi_k$) eine räumliche Glättung der Meßwerte vorgenommen wird.

9. Verfahren nach einem der Ansprüche 1 bis 8,
   **dadurch gekennzeichnet**,

   daß die zu Antennen ausgebildeten Sensoren zum Senden und Empfangen von hochfrequenten elektro-magnetischen Signalen geeignet sind.

10. Verfahren nach Anspruch 9,
    **dadurch gekennzeichnet**,

    daß es in Mobilfunksystemen zum Einsatz kommt.

11. Verfahren nach Anspruch 9,
    **dadurch gekennzeichnet**,

    daß es in Drahtlos-Kommunikationssystemen zum Einsatz kommt.

12. Verfahren nach Anspruch 9,
    **dadurch gekennzeichnet**,

    daß es in hochauflösenden Radarbildverarbeitungssystemen zum Einsatz kommt.

13. Verfahren nach einem der Ansprüche 1 bis 8,
    **dadurch gekennzeichnet**,

    daß die zu Schallempfängern ausgebildeten Sensoren zum Senden und Empfangen von akustischen Signalen geeignet sind.

14. Verfahren nach Anspruch 13,
    **dadurch gekennzeichnet**,

    daß es in Sonarsystemen zum Einsatz kommt.

15. Verfahren nach Anspruch 13,
    **dadurch gekennzeichnet**,

    daß es in medizintechnischen Systemen zum Einsatz kommt.

16. Empfangseinrichtung

    mit einer zugeordneten zentro-symmetrischen Sensorgruppe, die p Signalkomponenten ($x_k$) zuordenbare Wellenfronten empfängt, und
    mit Mitteln zur Signalverarbeitung,

die zur Rekonstruktion von durch Mehrwegeausbreitung gestörten Signalen ($s_1,s_2$) derart ausgestaltet sind, daß

1) eine Bestimmung der Einfallsrichtung ($\theta_k,\phi_k$) der jeweils d dominanten Signalkomponenten ($x_k$, k=1..d) zugehörigen Wellenfronten unter Vernachlässigung von p-d leistungsschwächeren Signalkomponenten ($x_k$, k=d..p) und Störkomponenten durch Ausnutzung zwischen den Sensorelementen auftretender Phasendifferenzen bezüglich einer Wellenfront und eine Rekonstruktion der d dominanten Signalkomponenten ($x_k$, k=1..d) und

2) unter Zuhilfenahme der gemäß Maßnahme 1) rekonstruierten d dominanten Signalkomponenten ($x_k$, k=1..d)

- eine Zuordnung der bestimmten d dominanten Signalkomponenten ($x_k$, k=1..d) zu den zugehörigen, räumlich getrennten Signalquellen (SQ$_1$,SQ$_2$) und
- eine Rekonstruktion der Signale ($s_1,s_2$) durch eine Kombination der zu einer Signalquelle (SQ$_1$,SQ$_2$) zugehörigen Signalkomponenten ($x_k$)

vorgenommen wird.

17. Empfangseinrichtung nach Anspruch 16, bei der durch die Mittel zur Signalverarbeitung ausgehend von der Zuordnung der d dominanten Signalkomponenten ($x_k$, k=1..d) zu den Signalquellen (SQ$_1$,SQ$_2$) für die jeweils einer Signalquelle (SQ$_1$,SQ$_2$) zugehörigen Signalkomponenten ($x_k$) eine die phasenrichtige Überlagerung gestattende Zuordnung von Verzögerungszeiten ($vz_k$) und Wichtungsfaktoren ($w_k$) vorgenommen wird.

18. Empfangseinrichtung nach einem der Ansprüche 16 oder 17, dadurch gekennzeichnet,
daß als erste Maßnahme durch die Mittel zur Signalverarbeitung

- eine komplexe Meßwertmatrix ($\tilde{X}$) mit einer durch die Anzahl der Sensorelemente und die Anzahl der Abtastwerte bestimmten Dimension (M x N) durch Abspeichern der Abtastwerte initialisiert wird,
- eine Bestimmung einer ausschließlich reelle Werte enthaltenden, den Meßwerten zuordenbaren zweiten, rein reellen Matrix (T($\tilde{X}$)) mit der doppelten Elementezahl durch eine Ähnlichkeitsabbildung einer aus der komplexen Meßwertmatrix ($\tilde{X}$) und einer Verknüpfung der M-dimensionalen antidiagonalen Permutationsmatrix ($\Pi_M$), der konjugiert komplexen Meßwertmatrix ($\tilde{X}$ *) und einer N-dimensionalen antidiagonalen Permutationsmatrix ($\Pi_N$) gebildeten zentro-hermitischen Matrix über eine M-dimensionale links $\Pi$-reelle, transjugierte Matrix ($Q_M^H$) und die 2N-dimensionale links $\Pi$-reelle Matrix ($Q_{2N}$) nach der Beziehung

$$T(\tilde{X}) = Q_M^H \begin{bmatrix} \tilde{X} & \Pi_M \tilde{X}^* \Pi_N \end{bmatrix} Q_{2N}$$

vorgenommen wird,
- eine Signalunterraumschätzung zur Ermittlung der reellen Signalunterraummatrix ($E_s$) durch Verarbeitung der zweiten, rein reellen Matrix (T($\tilde{X}$)), deren Signalunterraum durch die d dominanten Spaltenvektoren der Signalunterraummatrix ($E_s$) aufgespannt wird,
- eine für jede Auswertedimension des Verfahrens getrennt vorgenommene Untergruppenbildung der zentro-symmetrischen Sensorgruppe in zwei zueinander verschobenen Untergruppen und eine Festlegung von je zwei Selektionsmatrizen ($K_1,K_2$) für jede Auswertedimension entsprechend der Konfiguration der Untergruppen vorgenommen wird,
- eine für jede Auswertedimension des Verfahrens getrennt vorgenommene Lösung des durch die aus der Signaluntergruppenbildung hervorgegangenen, die d dominanten Spaltenvektoren enthaltenden Signalunterraummatrix ($E_s$) und die Selektionsmatrizen ($K_1,K_2$) vorgegebenen Gleichungssystems durchgeführt wird, so daß jeweils eine Lösungsmatrix (Y) gemäß $K_1 E_s Y \approx K_2 E_s$ zur Verfügung steht,
- eine Bestimmung der je nach der Dimension des Auswerteverfahrens reellen bzw. komplexen Eigenwertmatrix ($\Omega$) aus der Lösungsmatrix (Y) vorgenommen wird und
- eine Rekonstruktion der Signalkomponenten ($x_k$, k=1..d) durch eine Multiplikation einer Pseudoinversen einer geschätzten, die Phasenfaktoren ($e^{j\mu_k}$) der ermittelten Eigenwerte ($\omega_k$) enthaltenden Systemmatrix ($\hat{A}$) mit der komplexen Meßwertmatrix ($\tilde{X}$) vorgenommen wird.

19. Empfangseinrichtung nach einem der Ansprüche 16 bis 18, **dadurch gekennzeichnet,**

daß die Sensorgruppe eindimensional ausgebildet ist und aus M Elementen besteht, und

die Richtungsauswertung nur eine Dimension aufweist.

**20.** Empfangseinrichtung nach Anspruch 18 und 19,
**dadurch gekennzeichnet**,

daß durch die Mittel zur Signalverarbeitung eine Zuverlässigkeitsabschätzung der Rekonstruktion der Signalkomponenten ($x_k$, k=1..d) durch einen Test der ermittelten Eigenwerte ($\omega_k$) vorgesehen ist.

**21.** Verfahren nach einem der Ansprüche 16 bis 18,
**dadurch gekennzeichnet**,

daß die Sensorgruppe zweidimensional ausgebildet ist und aus M Elementen besteht, und
die Richtungsauswertung in zwei Dimensionen erfolgt.

**22.** Empfangseinrichtung nach Anspruch 21,
**dadurch gekennzeichnet**,
daß die zweidimensionale, flächenhafte, zentro-symmetrische, in zwei Richtungen invariable Sensorgruppe aus M Elementen besteht und das Verfahren die Auswertedimensionen x und y aufweist, so daß

- die Selektionsmatrizen ($K_{\mu 1}, K_{\mu 2}, K_{\nu 1}, K_{\nu 2}$) entsprechend den zwei Dimensionen der Sensorgruppe bestimmt werden,
- die Lösung des durch die aus der Signaluntergruppenbildung hervorgegangenen, die d dominanten Signalvektoren enthaltenden Signalunterraummatrix ($E_s$) und die Selektionsmatrizen ($K_1, K_2$) vorgegebenen Gleichungssystems nach den Dimensionen x und y gemäß den Beziehungen $K_{\mu, \nu 1} E_s Y_{\mu, \nu} \approx K_{\mu, \nu 2} E_s$ durchgeführt wird, so daß jeweils eine Lösungsmatrix (**Y**) gemäß $K_1 E_s Y \approx K_2 E_S$ vorgenomen wird und die Lösungsmatrizen ($Y_\mu, Y_\nu$) zur Verfügung stehen,
- die Paarung der Eigenwerte der Lösungsmatrizen ($Y_\mu, Y_\nu$) über eine komplexe Bestimmung der komlexen Eigenwertmatrix ($\Omega$) nach der Beziehung $Y_\mu + jY_\nu = T\Omega T^{-1}$ erfolgt und
- die durch den Azimut ($\theta_k$) und Elevationswinkel ($\phi_k$) repräsentierten Einfallsrichtungen durch die Beziehungen $\omega_{\mu k} = \tan(\mu_k/2), \omega_{\nu k} = \tan(\nu_k/2); u_k = \cos\phi_k\sin\theta_k, \nu_k = \sin\phi_k\sin\theta_k$ und $\mu_k = 2\pi/\lambda \cdot \Delta_x u_k, \nu_k = 2\pi/\lambda \cdot \Delta_y \nu_k$ bestimmt werden.

**23.** Empfangseinrichtung nach einem der Ansprüche 16 bis 22,
**dadurch gekennzeichnet**,

daß die Mittel zur Signalverarbeitung derart ausgestaltet sind, daß vor der Bestimmung der Einfallsrichtungen ($\theta_k, \phi_k$) eine räumliche Glättung der Meßwerte vorgenommen wird.

**24.** Empfangseinrichtung nach einem der Ansprüche 16 bis 23,
**dadurch gekennzeichnet**,

daß die zu Antennen ausgebildeten Sensoren zum Senden und Empfangen von hochfrequenten elektro-magnetischen Signalen geeignet sind und die Empfangseinrichtung Teil einer Basisstation eines Mobilfunknetzes oder eines Drahtlos-Kommunikationsnetzes ist.

## Claims

**1.** Method for reconstructing signals ($s_1, s_2$) disturbed by multipath propagation in which wave fronts, which can be allocated to p signal components ($x_k$) are received by means of a centro-symmetric sensor group, comprising two measures which are to be performed separately:

1) a determination of the direction of incidence ($\theta_k, \phi_k$) of the wave fronts in each case belonging to d dominant signal components ($x_k$, k=1..d), neglecting p-d signal components of lower power ($x_k$, k=d..p) and interference components, utilizing phase differences with respect to a wave front, occurring between the sensor elements, and a reconstruction of the d dominant signal components ($x_k$, k=1..d) and
2) with the assistance of the d dominant signal components ($x_k$, k=1..d) reconstructed according to measure 1),

- a correlation of the determined d dominant signal components ($x_k$, k=1..d) with the associated spatially separate signal sources ($SQ_1, SQ_2$), and
- a reconstruction of the signals ($s_1, s_2$) by combining the signal components ($x_k$) belonging to one signal source ($SQ_1, SQ_2$).

2. Method according to Claim 1, characterized in that, based on the correlation of the d dominant signal components ($x_k$, k=1..d) with the signal sources ($SQ_1$, $SQ_2$), a correlation of delay times ($vz_k$) and weighting factors ($w_k$) allowing the superimposition in the correct phase is performed for the signal components ($x_k$) in each case belonging to one signal source ($SQ_1, SQ_2$).

3. Method according to one of Claims 1 or 2, characterized in that, as the first measure,

- a complex measurement value matrix ($\tilde{\pmb{X}}$) having a dimension (M x N) determined by the number of sensor elements and by the number of samples is initialized by storing the samples,
- a determination of a second, purely real matrix (T($\tilde{\pmb{X}}$)) having twice the number of elements, which can be allocated to the measurement values and only contains real values, is performed by a similarity mapping of a centro-hermitic matrix, formed from the complex measurement value matrix ($\tilde{\pmb{X}}$) and a logical combination of the M-dimensional antidiagonal permutation matrix ($\Pi_M$), the conjugate complex measurement value matrix ($\tilde{\pmb{X}}^*$) and an N-dimensional antidiagonal permutation matrix ($\Pi_N$) via an M-dimensional left-$\Pi$-real transjugate matrix ($\pmb{Q}_M^H$) and the 2N-dimensional left-$\Pi$-real matrix ($Q_{2N}$) in accordance with the relationship,
- a signal subspace estimation for determining the real signal subspace matrix ($\pmb{E}_s$) which is performed by processing the second, purely real matrix (T($\tilde{\pmb{X}}$)), the signal subspace of which is spanned by the d dominant column vectors of the signal subspace matrix ($\pmb{E}_s$),
- a formation of subgroups, performed separately for each dimension of analysis of the method, of the centro-symmetric sensor group into two mutually offset subgroups and a specification of in each case two selection matrices ($\pmb{K}_1$, $\pmb{K}_2$) is performed for each dimension of analysis in accordance with the configuration of the subgroups,
- a solution, performed separately for each dimension of analysis of the method, of the system of equations given by the signal subspace matrix ($\pmb{E}_s$), produced from the formation of the signal subgroups and containing the d dominant column vectors, and the selection matrices ($\pmb{K}_1$, $\pmb{K}_2$) is performed so that in each case a solution matrix (Y) according to $\pmb{K}_1 \pmb{E}_s \pmb{Y} \approx \pmb{K}_2 \pmb{E}_s$ is available,
- a determination of the eigenvalue matrix ($\Omega$), which is complex or real depending on the dimension of the analysis method, from the solution matrix (Y) is performed and
- a reconstruction of the signal components ($x_k$, k=1..d) is performed by multiplying a pseudo-inverse of an estimated system matrix (Â), containing the phase factors ($e^{j\mu_k}$) of the determined eigenvalues ($\omega_k$) by the complex measurement value matrix ($\tilde{\pmb{X}}$).

4. Method according to one of Claims 1 to 3, characterized in that the sensor group is constructed to be one-dimensional and consists of M elements and in that the method has only one direction analysis dimension.

5. Method according to Claim 3 and 4, characterized in that a reliability estimation of the method by means of a test of the determined eigenvalues ($\omega_k$) is provided.

6. Method according to one of Claims 1 to 3, characterized in that the sensor group is constructed to be two-dimensional and consists of M elements and in that the method has two direction analysis dimensions.

7. Method according to Claim 6, characterized in that the two-dimensional planar centro-symmetric sensor group, which is invariable in two directions, consists of M elements and the method has the analysis dimensions x and y, and in that

- the selection matrices ($\pmb{K}_{\mu1}, \pmb{K}_{\mu2}, \pmb{K}_{\nu1}, \pmb{K}_{\nu2}$) are determined in accordance with the two dimensions of the sensor group,
- the solution of the system of equations given by the signal subspace matrix ($\pmb{E}_s$), produced from the formation of the signal subgroups and containing the d dominant signal vectors, and by the selection matrices ($\pmb{K}_1, \pmb{K}_2$) is performed in accordance with the dimensions x and y in accordance with the relationships $\pmb{K}_{\mu,\nu1} \pmb{E}_s \pmb{Y}_{\mu,\nu} \approx \pmb{K}_{\mu,\nu2} \pmb{E}_s$ so that in each case a solution matrix (Y) according to $\pmb{K}_1 \pmb{E}_s \pmb{Y} \approx \pmb{K}_2 \pmb{E}_s$ is performed and the solution matrices ($\pmb{Y}_\mu, \pmb{Y}_\nu$) are available,
- the pairing of the eigenvalues of the solution matrices ($\pmb{Y}_\mu, \pmb{Y}_\nu$) is performed via a complex determination of the

complex eigenvalue matrix ($\Omega$) according to the relationship $\mathbf{Y}_\mu + j\mathbf{Y}_\nu = T\Omega T^{-1}$, and

- the directions of incidence represented by the azimuth ($\theta_k$) and elevation angle ($\phi_k$) are determined by the relationships

$$\omega_{\mu k} = \tan(\mu_k/2), \omega_{\nu k} = \tan(\nu_k/2); \; u_k = \cos\phi_k \sin\theta_k, \; v_k = \sin\phi_k \sin\theta_k \text{ and } \mu_k = 2\pi/\lambda \cdot \Delta_x u_k, \; \nu_k = 2\pi/\lambda \cdot \Delta_y v_k.$$

8. Method according to one of Claims 1 to 7, characterized in that a spatial smoothing of the measurement values is performed before the determination of the directions of incidence ($\theta_k, \phi_k$).

9. Method according to one of Claims 1 to 8, characterized in that the sensors, constructed as antennas, are suitable for transmitting and receiving electromagnetic radio-frequency signals.

10. Method according to Claim 9, characterized in that it is used in mobile radio systems.

11. Method according to Claim 9, characterized in that it is used in wireless communication systems.

12. Method according to Claim 9, characterized in that it is used in high-resolution radar image processing systems.

13. Method according to one of Claims 1 to 8, characterized in that the sensors, constructed as sound receivers, are suitable for transmitting and receiving acoustic signals.

14. Method according to Claim 13, characterized in that it is used in sonar systems.

15. Method according to Claim 13, characterized in that it is used in medical technical systems.

16. Receiving device comprising an associated centro-symmetric sensor group which receives wave fronts which can be allocated to p signal components ($x_k$), and comprising means for signal processing which are designed for the reconstruction of signals ($s_1, s_2$) disturbed by multipath propagation, in such a manner that

1) a determination of the direction of incidence ($\theta_k, \phi_k$) of the wave fronts in each case belonging to d dominant signal components ($x_k$, k=1..d), neglecting p-d signal components of lower power ($x_k$, k=d..p) and interference components, utilizing phase differences with respect to a wave front, occurring between the sensor elements, and a reconstruction of the d dominant signal components ($x_k$, k=1..d) and
2) with the assistance of the d dominant signal components ($x_k$, k=1..d) reconstructed according to measure 1),

- a correlation of the determined d dominant signal components ($x_k$, k=1..d) with the associated spatially separate signal sources ($SQ_1, SQ_2$), and
- a reconstruction of the signals ($s_1, s_2$) by combining the signal components ($x_k$) belonging to one signal source ($SQ_1, SQ_2$).

17. Receiving device according to Claim 16, in which, by means of the means for signal processing, based on the correlation of the d dominant signal components ($x_k$, k=1..d) with the signal sources ($SQ_1, SQ_2$), a correlation of delay times ($vz_k$) and weighting factors ($w_k$) allowing the superimposition in the correct phase is performed for the signal components ($x_k$) in each case belonging to one signal source ($SQ_1, SQ_2$).

18. Receiving device according to one of Claims 16 or 17, characterized in that, as a first measure by the means for signal processing,

- a complex measurement value matrix ($\tilde{\mathbf{X}}$) having a dimension (M x N) determined by the number of sensor elements and by the number of samples is initialized by storing the samples,
- a determination of a second, purely real matrix ($\mathbf{T}(\tilde{\mathbf{X}})$) having twice the number of elements, which can be allocated to the measurement values and only contains real values, is performed by a similarity mapping of a centro-hermitic matrix, formed from the complex measurement value matrix ($\tilde{\mathbf{X}}$) and a logical combination of the M-dimensional antidiagonal permutation matrix ($\Pi_M$), the conjugate complex measurement value matrix ($\tilde{\mathbf{X}}^*$) and an N-dimensional antidiagonal permutation matrix ($\Pi_N$), via an M-dimensional left-$\Pi$-real transjugate matrix ($\mathbf{Q}_M^H$) and the 2N-dimensional left-$\Pi$-real matrix ($\mathbf{Q}_{2N}$) in accordance with the relationship,
- a signal subspace estimation for determining the real signal subspace matrix ($\mathbf{E}_s$) which is performed by processing the second, purely real matrix ($\mathbf{T}(\tilde{\mathbf{X}})$), the signal subspace of which is spanned by the d dominant column vectors of the signal subspace matrix ($\mathbf{E}_s$),

- a formation of subgroups, performed separately for each dimension of analysis of the method, of the centro-symmetric sensor group into two mutually offset subgroups and a specification of in each case two selection matrices ($K_1$, $K_2$) is performed for each dimension of analysis in accordance with the configuration of the subgroups,
- a solution, performed separately for each dimension of analysis of the method, of the system of equations given by the signal subspace matrix ($E_s$), produced from the formation of the signal subgroups and containing the d dominant column vectors, and the selection matrices ($K_1, K_2$) is performed so that in each case a solution matrix (Y) according to $K_1 E_s Y \approx K_2 E_s$ is available,

  - a determination of the eigenvalue matrix ($\Omega$), which is complex or real depending on the dimension of the analysis method, from the solution matrix (Y) is performed and
  - a reconstruction of the signal components ($x_k$, k=1..d) is performed by multiplying a pseudo-inverse of an estimated system matrix ($\hat{A}$), containing the phase factors $(e^{j\mu k})$ of the determined eigenvalues ($\omega_k$) by the complex measurement value matrix ($\tilde{\underline{x}}$).

19. Receiving device according to one of Claims 16 to 18, characterized in that the sensor group is constructed to be one-dimensional and consists of M elements and in that the analysis of direction has only one dimension.

20. Receiving device according to Claims 18 and 19, characterized in that, by means of the means for signal processing, a reliability estimation of the reconstruction of the signal components ($x_k$, k=1..d) by means of a test of the determined eigenvalues ($\omega_k$) is provided.

21. Receiving device according to one of Claims 16 to 18, characterized in that the sensor group is constructed to be two-dimensional and consists of M elements and in that the analysis of direction is performed in two dimensions.

22. Receiving device according to Claim 21, characterized in that the two-dimensional planar centro-symmetric sensor group, which is invariable in two directions, consists of M elements and the method has the analysis dimensions x and y, so that

   - the selection matrices ($K_{\mu 1}, K_{\mu 2}, K_{\nu 1}, K_{\nu 2}$) are determined in accordance with the two dimensions of the sensor group,
   - the solution of the system of equations given by the signal subspace matrix ($E_s$), produced from the formation of the signal subgroups and containing the d dominant signal vectors, and by the selection matrices ($K_1, K_2$) is performed in accordance with the dimensions x and y in accordance with the relations $K_{\mu,\nu 1} E_s Y_{\mu,\nu} \approx K_{\mu,\nu 2} E_s$ so that in each case a solution matrix (Y) according to $K_1 E_s Y \approx K_2 E_s$ is performed and the solution matrices ($Y_\mu, Y_\nu$) are available,
   - the pairing of the eigenvalues of the solution matrices ($Y_\mu, Y_\nu$) is performed via a complex determination of the complex eigenvalue matrix ($\Omega$) according to the relationship $Y_\mu + jY_\nu = T\Omega T^{-1}$, and
   - the directions of incidence represented by the azimuth ($\theta_k$) and elevation angle ($\phi_k$) are determined by the relationships
   $\omega_{\mu k} = \tan(\mu_k/2), \omega_{\nu k} = \tan(\nu_k/2); u_k = \cos\phi_k \sin\theta_k, \nu_k = \sin\phi_k \sin\theta_k$ and $\mu_k = 2\pi/\lambda \cdot \Delta_x u_k, \nu_k = 2\pi/\lambda \cdot \Delta_y \nu_k$

23. Receiving device according to one of Claims 16 to 22, characterized in that the means for signal processing are designed in such a manner that, before the determination of the directions of incidence ($\theta_k, \phi_k$), a spatial smoothing of the measurement values is performed.

24. Receiving device according to one of Claims 16 to 23, characterized in that the sensors, constructed as antennas, are suitable for transmitting and receiving electromagnetic radio-frequency signals and the receiving device is a part of a base station of a mobile radio network or of a wireless communications network.

## Revendications

1. Procédé pour reconstituer des signaux ($s_1$, $s_2$) brouillés par une propagation par trajet multiple, des fronts d'onde pouvant être associés à p composantes ($x_k$) de signal étant reçus aux moyens d'un groupe capteur à centre de symétrie,

   comportant deux mesures à effectuer séparément :

1) une détermination de la direction $(\theta_k, \phi_k)$ d'incidence des fronts d'onde associés à des composantes $(x_k, k = 1...d)$ de signal dominantes, en négligeant p-d composantes $(x_k, k = d...p)$ de signal de plus faible puissance et des composantes parasites, en utilisant des différences de phase apparaissant pour un front d'onde entre les éléments capteurs, et une reconstitution des d composantes $(x_k, k = 1...d)$ de signal dominantes, et,

2) à l'aide des d composantes $(x_k, k = 1...d)$ de signal dominantes reconstituées suivant la mesure (1),

- une association des d composantes $(x_k, k = 1...d)$ de signal dominantes déterminées, aux sources $(SQ_1, SQ_2)$ de signaux associées, séparées dans l'espace, et
- une reconstitution des signaux $(s_1, s_2)$ par une combinaison des composantes $(x_k)$ de signal associées à une source $(SQ_1, SQ_2)$ de signaux.

2. Procédé suivant la revendication 1,
caractérisé en ce que, à partir de l'association des d composantes $(x_k, k = 1...d)$ de signal dominantes aux sources $(SQ_1, SQ_2)$ de signaux, on procède pour chaque composante $(x_k)$ de signal associée à une source $(SQ_1, SQ_2)$ de signaux à une association de temps $(vz_k)$ de retard et de facteurs $(w_k)$ de pondération permettant une superposition correcte en phase.

3. Procédé suivant l'une des revendications 1 ou 2,
caractérisé en ce que, comme première mesure,

- on initialise, par mise en mémoire des valeurs d'échantillonnage, une matrice (X) de valeur complexe ayant une dimension (M x N) déterminée par le nombre des éléments capteurs et le nombre des valeurs d'échantillonnage,
- on détermine une deuxième matrice $(T(\overline{X}))$ entièrement réelle, contenant exclusivement des valeurs réelles, pouvant être associées aux valeurs de mesure et ayant un nombre double d'éléments par une homothétie d'une matrice centro-hermitienne, formée de la matrice $(\overline{X})$ complexe de valeurs de mesure et d'une combinaison de la matrice $(\Pi_M)$ de permutation antidiagonale de dimension M, de la matrice $(\overline{X}^*)$ complexe conjuguée de valeur de mesure et d'une matrice $(\Pi_n)$ de permutation antidiagonale de dimension-N, par une matrice $(Q^H)$ associée de dimension M $\Pi$-réelle à gauche et par la matrice $(Q_{2N})$ de dimension-2N, $\Pi$-réelle à gauche, suivant la relation,

$$T(\overline{X}) = Q_M^H [X \; \Pi_M \overline{X}^* \Pi_N] Q_{2N}$$

- on estime un sous-espace de signaux pour déterminer la matrice $(E_s)$ réelle de sous-espaces de signaux par traitement de la deuxième matrice $(T(X))$ entièrement réelle, dont le sous-espace de signaux est étendu par les d vecteurs colonnes dominants de la matrice $(E_s)$ de sous-espaces de signaux,
- par une opération séparée pour chaque dimension d'évaluation du procédé, on forme un sous-groupe du groupe capteur à centre de symétrie en deux sous-groupes décalés l'un par rapport à l'autre et on fixe chaque fois deux matrices $(K_1, K_2)$ de sélection pour chaque dimension d'évaluation, suivant la configuration des sous-groupes,
- par une opération séparée pour chaque dimension d'évaluation du procédé, on résout le système d'équations prescrit par la matrice $(E_s)$ de sous-espaces de signaux obtenue à partir de la formation de sous-groupes de signaux et contenant les d vecteurs colonnes dominants et par les matrices $(K_1, K_2)$ de sélection, si bien que l'on dispose chaque fois d'une matrice (Y) de solution suivant $K_1 E_s Y \approx K_2 E_s$,
- on détermine à partir de la matrice (Y) de solution la matrice $(\Omega)$ de valeur propre réelle ou complexe suivant la dimension du procédé d'évaluation et,
- on reconstitue les composantes $(x_k, k = 1...d)$ de signal par une multiplication d'une matrice pseudo-réciproque d'une matrice $\overline{A}$ de système évaluée et contenant les facteurs $(e^{j\mu k})$ de phase des valeurs $(\omega_k)$ propres déterminées, par la matrice $(\overline{X})$ complexe de valeurs de mesure.

4. Procédé suivant l'une des revendications 1 à 3, caractérisé en ce que le groupe capteur est réalisé de manière à être à une dimension et est constitué de M éléments et en ce que le procédé ne comporte qu'une dimension d'évaluation de direction.

5. Procédé suivant la revendication 3 et 4, caractérisé en ce qu'il est prévu une estimation de fiabilité du procédé par un test des valeurs $(\omega_k)$ propres déterminées.

6. Procédé suivant l'une des revendications 1 à 3, caractérisé en ce que le groupe capteur est réalisé de manière à être à deux dimensions et est constitué de M éléments et en ce que le procédé comporte deux dimensions d'évaluation de direction.

7. Procédé suivant la revendication 6, caractérisé en ce que le groupe capteur à deux dimensions, en surface, à centre de symétrie et invariable dans deux directions est constitué de M éléments et le procédé comporte les dimensions x et y d'exploitation, en ce que

les matrices $(K_{\mu1},K_{\mu2},K_{v1},K_{v2})$ de sélection sont déterminées suivant les deux dimensions du groupe capteur,

- la résolution du système d'équations prescrit par la matrice $(E_s)$ de sous-espace de signaux, obtenu par la formation de sous-groupes de signaux et contenant les d vecteurs signal dominants, et par les matrices $(K_1, K_2)$ de sélection est effectuée suivant les dimensions x et y, conformément au relations $(K_{\mu,v1} E_s Y_{\mu,v} \approx K_{\mu,v2} E_s)$, si bien que l'on obtient chaque fois une matrice (Y) de solution, suivant $K_1 E_s Y \approx K_2 E_s$ et que l'on dispose des matrices $(Y_{\mu}, Y_v)$ de solution,
- le couplage des valeurs propres des matrices $(Y_{\mu}, Y_v)$ de solution s'effectue par l'intermédiaire d'une détermination complexe de la matrice (Q) complexe de valeur propre suivant la relation $Y_{\mu}+jY_v=T\Omega T^{-1}$ et
- les directions d'incidence représentées par l'azimut $(\theta_k)$ et l'angle $(\phi_k)$ d'élévation sont déterminées par les relations $\overline{\omega}_{\mu k} = \tan (\mu_k/2), \omega_{yk} = \tan (v_k /2); u_k = \cos\phi_k\sin\theta_k, v_k=\sin\phi_k\sin\theta_k$ et $\mu_k =2\pi/\lambda. \Delta_x u_k, v_k = 2\pi/\lambda.\Delta_y v_k$

8. Procédé suivant l'une des revendications 1 à 7, caractérisé en ce que l'on procède à un lissage dans l'espace des valeurs de mesure avant de déterminer les directions $(\theta_k,\phi_k)$ d'incidence.

9. Procédé suivant l'une des revendications 1 à 8, caractérisé en ce que les capteurs réalisés en antenne conviennent à l'émission et à la réception de signaux électromagnétique haute fréquence.

10. Procédé suivant la revendication 9, caractérisé en ce qu'on l'utilise dans des systèmes de radiocommunication mobiles.

11. Procédé suivant la revendication 9, caractérisé en ce que l'on l'utilise dans des systèmes de communication sans fil.

12. Procédé suivant la revendication 9, caractérisé en ce que l'on l'utilise dans des systèmes de traitement à image radar de haute résolution.

13. Procédé suivant l'une des revendications 1 à 8, caractérisé en ce que les capteurs réalisés en récepteurs électroacoustiques conviennent à l'émission et à la réception de signaux acoustiques.

14. Procédé suivant la revendication 13, caractérisé en ce qu'on l'utilise dans des systèmes de sonar.

15. Procédé suivant la revendication 13, caractérisé en ce qu'on l'utilise dans des systèmes de la technique médicale.

16. Dispositif de réception comportant un groupe capteur à centre de symétrie associé qui reçoit des fronts d'onde pouvant être associés à p composantes $(x_k)$ de signal et

- comportant des moyens de traitement de signaux qui, pour la reconstitution de signaux $(s_1,s_2)$ brouillés par une propagation à trajet multiple, sont réalisés de telle manière que s'effectue

1) une détermination de la direction $(\theta_k, \phi_k)$ d'incidence des fronts d'onde associés aux d composantes $(x_k, K=1 ...d)$ de signal dominantes. en négligeant p-d composantes $(x_k, k=d ...p)$ de signal de plus faible puissance et des composantes parasites, en utilisant des différences de phase pour un front d'onde apparaissant entre les éléments capteurs et une reconstitution des d composantes $(x_k, k=1 ...d)$ de signal dominantes et,
2) à l'aide des d composantes $(x_k, k=1 ...d)$ de signal dominantes reconstituées suivant la mesure 1,

- une association des d composantes $(x_k, k=1 ...d)$ de signal dominantes déterminées aux sources $(SQ_1,SQ_2)$ de signaux associées, séparées dans l'espace, et
- une reconstitution des signaux $(s_1,s_2)$ par une combinaison des composantes $(x_k)$ de signal associées à une source $(SQ_1,SQ_2)$ de signaux.

**17.** Dispositif de réception suivant la revendication 16, dans lequel, par les moyens servant au traitement de signaux, on procède, à partir de l'association des d composantes ($x_k$, k=1 ...d) de signal dominantes aux sources ($SQ_1$, $SQ_2$) de signaux, pour les composantes ($x_k$) associées à une source ($SQ_1$,$SQ_2$) de signaux, à une association de temps ($vz_k$) de retard et de facteur ($w_k$) de pondération permettant une superposition correcte en phase.

**18.** Dispositif de réception suivant l'une des revendications 16 ou 17, caractérisé en ce que, comme première mesure, par les moyens de traitement de signaux,

- on initialise, en mettant en mémoire les valeurs d'échantillonnage, une matrice ($\bar{X}$) complexe de valeurs de mesure ayant une dimension (M x N) déterminée par le nombre des éléments capteurs et le nombre des valeurs d'échantillonnage,
- on détermine une deuxième matrice ($T(\bar{X})$) entièrement réelle, contenant exclusivement des valeurs réelles, pouvant être associée aux valeurs de mesure et ayant le double d'éléments, par une homothétie d'une matrice centro-hermitienne formée de la matrice ($\bar{X}$) complexe de valeurs de mesure et d'une combinaison de la matrice ($\Pi_M$) de permutation antidiagonale de dimension M, de la matrice ($\bar{X}^*$) de valeurs de mesure complexe conjuguée et d'une matrice ($\Pi_N$) de permutation antidiagonale de dimension N, par l'intermédiaire d'une matrice ($Q_M^H$) associée, $\Pi$-réelle à gauche, de dimension N et par la matrice ($Q_{2N}$) $\Pi$-réelle à gauche, de dimension 2N, suivant la relation

$$T(\bar{X})=Q^H[\bar{X}\ \Pi_M\bar{X}^*\Pi_N]\ Q_{2N}$$

- on estime le sous-espace de signal pour déterminer la matrice ($E_s$) réelle de sous-espaces de signal par traitement de la deuxième matrice ($T(\bar{X})$ entièrement réelle, dont le sous-espace de signal est étendu par les d vecteurs colonnes dominants de la matrice ($E_s$) de sous-espaces de signal,
- par une opération séparée pour chaque dimension d'exploitation du procédé, on forme des sous-groupes du groupe capteur à centre de symétrie pour obtenir deux sous-groupes décalés l'un par rapport à l'autre et on fixe chaque fois deux matrices ($K_1$, $K_2$) de sélection pour chaque dimension d'exploitation, suivant la configuration des sous-groupes,
- par une opération effectuée séparément pour chaque dimension d'exploitation du procédé, on résout le système d'équations prescrit par la matrice ($E_s$) de sous-espaces de signal obtenue à partir de la formation de sous-groupes de signal et contenant les d vecteurs colonnes dominants et par les matrices ($K_1$, $K_2$) de sélection, si bien que l'on dispose chaque fois d'une matrice (y ) de solution suivant ($K_1\ E_s$, $Y \approx K_1\ E_s$),
- on détermine à partir de la matrice (Y) de solution, la matrice ($\Omega$) de valeurs propres, réelles ou complexes suivant la dimension du procédé d'exploitation, et
- on reconstitue les composants ($x_K$, k=1...d) de signal en multipliant une matrice pseudo-réciproque d'une matrice $\bar{A}$ de système estimée et contenant les facteurs ($e^{j\mu_k}$ ) de phase des valeurs ($\omega_k$) propres déterminées, par la matrice ($\bar{X}$) complexe de valeurs de mesure.

**19.** Dispositif de réception suivant l'une des revendications 16 à 18, caractérisé en ce que le groupe capteur est réalisé de manière à être à une dimension et est constitué de M éléments et
en ce que l'évaluation de direction ne comporte qu'une seule dimension.

**20.** Dispositif de réception suivant la revendication 18 et 19, caractérisé en ce que, par les moyens de traitement de signaux, il est prévu une estimation de fiabilité de la reconstitution des composantes ($x_k$, k = 1...d.) de signal par un test des valeurs ($\omega_k$) propres déterminées.

**21.** Procédé suivant l'une des revendications 16 à 18, caractérisé en ce que le groupe capteur est réalisé de manière à être à deux dimensions et est constitué de M éléments et
en ce que l'estimation de direction s'effectue dans deux dimensions.

**22.** Dispositif de réception suivant la revendication 21, caractérisé en ce que le groupe capteur à deux dimensions, en surface, à centre de symétrie et invariable dans deux directions est constitué de M éléments et le procédé comporte les dimensions (X et Y ) d'estimation si bien que

- les matrices ($K_{\mu 1}$, $K_{\mu 2}$, $K_{v1}$, $K_{v2}$) de sélection sont déterminées suivant les deux dimensions du groupe capteur,
- la résolution du système d'équations prescrit par la matrice ($E_s$) de sous-espaces de signal obtenue à partir de la formation de sous-groupes de signal et contenant les d vecteurs signal dominants et par les matrices

$(K_1, K_2)$ de sélection s'effectue suivant les relations $(K_{\mu,\nu1}E_sY_{\mu,\nu} \approx K_{\mu,\nu2}E_s)$, si bien que l'on obtient chaque fois une matrice $(Y)$ de solution conformément à $K_1E_SY \approx K_2E_s$ et que l'on dispose des matrices $(Y_\mu, Y_\nu)$ de solution,

- le couplage des valeurs propres des matrices $(Y_\mu, Y_\nu)$ de solution s'effectue par l'intermédiaire d'une détermination complexe de la matrice $(\Omega)$ complexe de valeurs propres suivant la relation $Y_\mu + jY_\nu = T\Omega T^{-1}$ et
- les directions d'incidence représentées par l'azimut $(\theta_1)$ et l'angle $(\phi_k)$ d'élévation sont déterminées par les relations $\bar{\omega}_{\mu k} = \tan(\mu_k/2), \omega_{yk} = \tan(\nu_k/2); u_k = \cos\phi_k\sin\theta_k, \nu_k = \sin\phi_k\sin\theta_k$ et $\mu_k = 2\pi/\lambda. \Delta_x u_k, \nu_k = 2\pi/\lambda.\Delta_y \nu_k$

23. Dispositif de réception suivant l'une des revendications 16 à 22 caractérisé en ce que les moyens de traitement de signaux sont réalisés de telle manière qu'il est procédé à un lissage dans l'espace des valeurs de mesure avant la détermination des directions $(\theta k, \phi k)$ d'incidence.

24. Dispositif de réception suivant l'une des revendications 16 à 23, caractérisé en ce que les capteurs réalisés en antennes conviennent à l'émission et à la réception de signaux électromagnétiques haute fréquence et en ce que le dispositif de réception fait partie d'une station de base d'un réseau de radiocommunication mobile ou d'un réseau de communication sans fil.

Fig